# EUROPEAN PATENT APPLICATION

(11) **EP 1 630 522 A1**
(43) Date of publication of application: **01.03.2006**
(21) Application number: 05107346.8
(22) Date of filing: 10.08.2005
(51) Int. Cl.: G01C 9/28

(54) **Spirit level with two degrees of freedom**

(30) Priority: 26.08.2004 IT BO20040070
(71) Applicant: Edil.Co s.a.s di Clemente Luana e C., 35047 Solesino PD (IT)
(72) Inventor: CLEMENTE, Corrado, 35047, SOLESINO PD (IT)
(74) Representative: Modiano, Micaela Nadia

(57) **Abstract**

A spirit level, comprising a frame (2) which in turn comprises a side for resting on the surface of the component whose arrangement is to be checked and a reading side provided with receptacles for accommodating two bulbs (9, 10), each of which contains a bubble, the bulbs being suitable to allow viewing of the bubbles from the same reading side of the frame, the bulbs being arranged at right angles to each other so that their respective bubbles can move along planes which are perpendicular to each other and to the resting side of the frame, so as to detect inclination along two degrees of freedom of the surface of the component with respect to the horizontal plane defined by the bubbles when they are in the centered position in the bulbs.

## Description

The present invention relates to a spirit level suitable to check the horizontality of a surface along two degrees of freedom.

As is known, a spirit level is an instrument which, in its most conventional form, is composed of a bar, which has a side for resting on the surface whose horizontality or verticality is to be checked and a receptacle for accommodating a bulb containing a liquid in which an air bubble floats. The bulb is constituted by a glass tube provided centrally with markings which consist of two spaced lines, which allow to detect the horizontal or vertical position of the surface when the air bubble, after resting the level on the surface, remains perfectly at the center between the two lines.

Some types of level are preset to check both the verticality and the horizontality of the surface: for this purpose, two bulbs are provided in which the glass tubes are mutually perpendicular.

However, currently commercially available levels do not allow rapid and precise use when it is necessary to check flatness along two degrees of freedom. For example, in the building sector, in order to check the horizontality of a surface of a component, such as step, windowsill and the like, when using a traditional level it is necessary to perform a first check of the horizontality of the component by arranging the level in one direction and then, after correcting the arrangement of the component, perform another check with consequent correction of the arrangement at right angles to the preceding direction, in order to make the values of horizontal planarity fall within the allowed tolerance range.

From what has been described, it is evident that checks performed with traditional levels are highly laborious, require too much time and a substantial physical effort on the part of the user, in view of the often substantial weight of the components on which one has to act to correct their trim.

The aim of the present invention is to provide a spirit level that is easier to handle and is more practical to use than conventional ones and allows to obviate their shortcomings, i.e., to provide quicker and safer checking of the arrangement of a component along multiple degrees of freedom.

Within this aim, an object of the present invention is to provide a level that allows to determine not only the inclination of a surface with respect to a horizontal plane but also to position components according to a predefined inclination.

Another object of the present invention is to provide a level that has a simple and sturdy structure, so as to withstand deformation stresses and ensure perfect operation even in harsh treatment conditions, as often occurs in the building sector.

This aim and these and other obj ects that will become better apparent hereinafter are achieved with a spirit level, characterized by a frame which comprises a side for resting on the surface of the component whose arrangement is to be checked and a reading side provided with receptacles for accommodating two bulbs, each of which contains a bubble, said bulbs being suitable to allow viewing of the bubbles from the same reading side of the frame, said bulbs being arranged at right angles to each other so that their respective bubbles can move along planes which are perpendicular to each other and to said resting side of the frame, so as to detect inclination along two degrees of freedom of the surface of the component with respect to the horizontal plane defined by said bubbles when they are in the centered position in the bulbs.

Further characteristics and advantages of the present invention will become better apparent from the following detailed description of some preferred embodiments thereof, illustrated by way of non-limiting example in the accompanying drawings, wherein:
Figure 1 is a perspective view of a level according to a first embodiment of the present invention;
Figure 2 is a perspective view of a level according to a second embodiment;
Figure 3 is a perspective view of a level according to a third embodiment;
Figure 4 is a perspective view of a level according to a fourth embodiment;
Figure 5 is a perspective view of a level according to a fifth embodiment;
Figure 6 is a perspective view of a level according to a sixth embodiment;
Figure 7 is a view, with parting lines, of a detail related to a variation; and
Figure 8 is a perspective view of another variation.

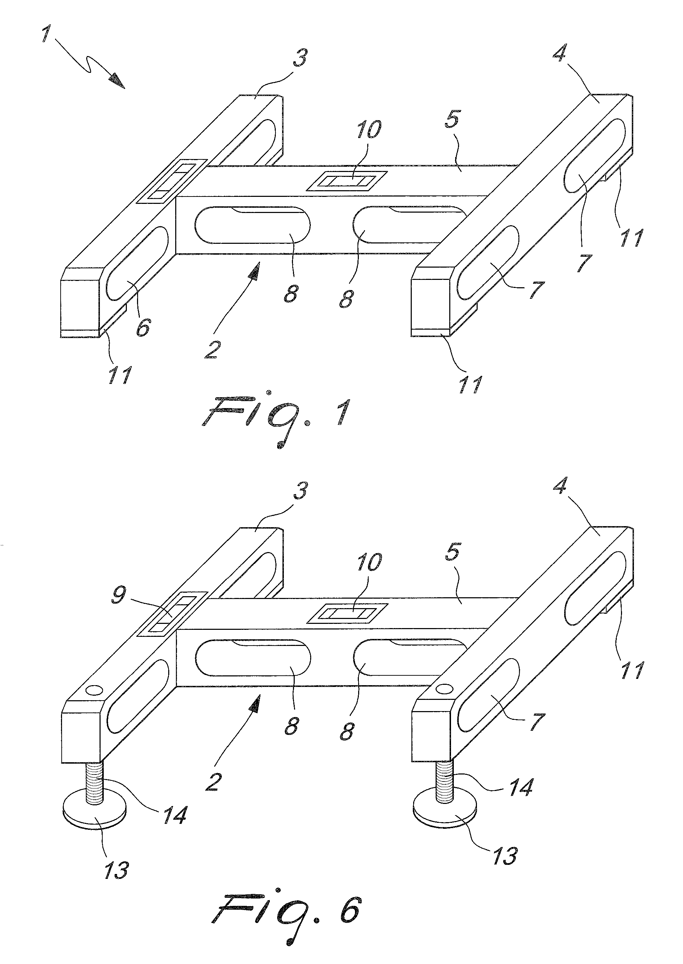

With reference to Figure 1, the reference numeral 1 generally designates a level according to the invention provided with two degrees of freedom, this term being used to indicate the capability of the level to check the horizontality of a surface along two mutually perpendicular orientations.

The level comprises an H-shaped frame 2, provided by means of metallic tubular profiles, preferably made of aluminum. The frame 2 is composed of two mutually parallel arms 3, 4 connected by a cross-member 5 which is perpendicular to them.

Openings 6, 7, 8 are formed in the arms 3, 4 and in the cross-member 5 and, in addition to lightening the frame 2 and therefore allowing easier handling thereof, are used as handles to facilitate grip on the part of the user during use of the level.

The frame 2 forms a lower side or face for resting on the component whose horizontality is to be checked and an upper face which forms the reading side or face of two bulbs containing a bubble 9, 10. The reading and resting sides of the frame are flat and mutually parallel.

The bulbs 9, 10 are fully traditional in their structure and comprise a glass tube which contains a liquid in which an air bubble floats and are accommodated and fixed in appropriately provided receptacles formed in the arm 3 and in the cross-member 5.

According to a particularity of the present invention, the bulbs 9, 10 are arranged on the arm 3 and on the cross-member 5 so that the position of both bubbles contained therein can be checked from the reading side of the frame. Further, the bulbs 9, 10 are oriented so that the bubbles can move on planes which are perpendicular to each other and to the reading side. The shape of the frame 2 and the arrangement of the bulbs 9, 10 allow users to have an immediate perception of the trim of the component without having to move the level 1. In this regard, it is noted that the level 1, once rested on the component, assumes a stable position, which allows the user to use both hands to act on the component and correct its trim. The level therefore allows, with a single reading, to identify the points of the component on which one has to act in order to perform trim corrections along two degrees of freedom.

One advantage of the described level is constituted by the H-shape of the frame 2, by way of which it is possible to check the arrangement of components which have cavities or irregular regions. In particular, the level can be used on channel-shaped components for which one wishes to determine the coplanar arrangement of the upper edges. In this case, the level can be rested for example by arranging the ends of the arms 3, 4 on the edges of the channel, keeping the cross-member 5 parallel to the edges.

Conveniently, the opposite ends of the arms 3, 4 of the level are provided with feet 11, which are suitable to minimize the effect of irregularities of the component on the surface on which the level rests.

The described invention is susceptible of numerous modifications and variations, all of which are within the scope of the solution idea.

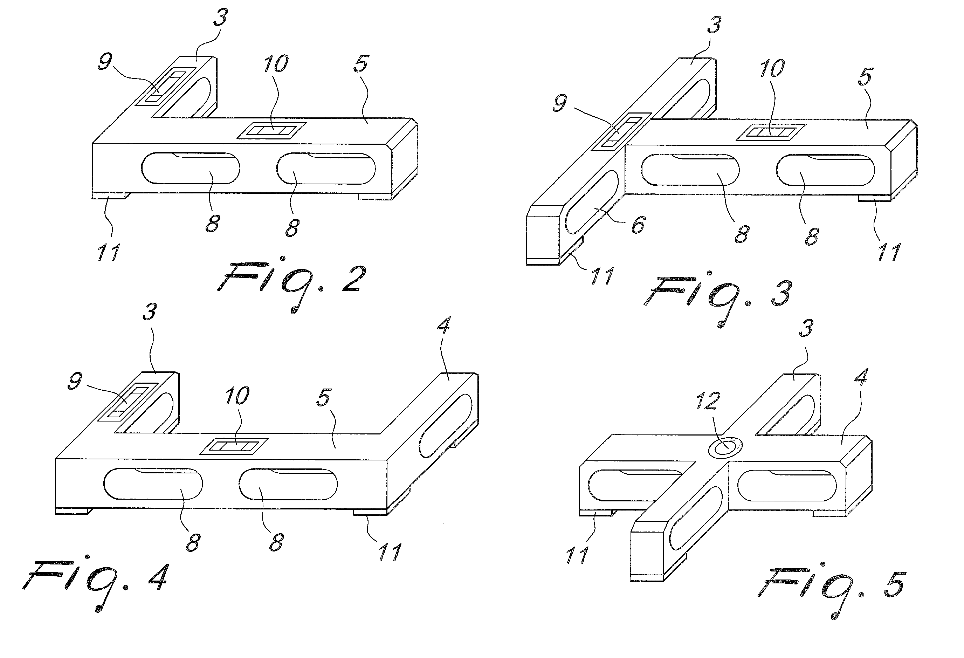

Figure 2 is a view of a first variation, in which the frame 2 is constituted by a cross-member 5 and by a single arm 3, which is connected in an L-shaped configuration to one end of the cross-member.

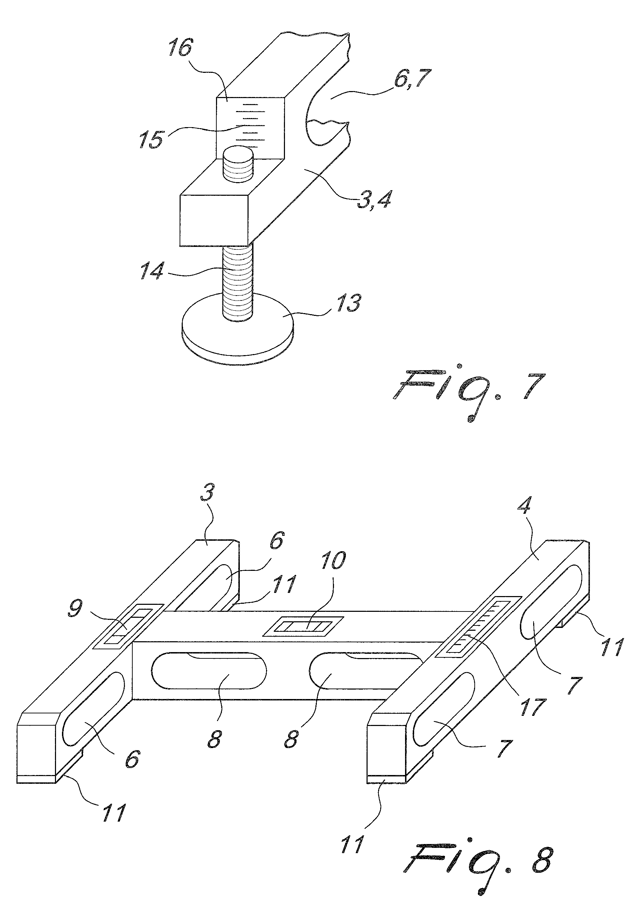

Figure 3 illustrates a second variation, in which the frame 2 is constituted by a cross-member and by a single arm 3, which are connected in a T-shaped configuration.

Figure 4 is a view of a third variation, in which the frame 2 is constituted by a cross-member 5 and by two arms 3, 4, which are connected in a U-shaped configuration to the opposite ends of the cross-member.

In all the variations shown in Figures 2, 3, 4, there are two bulbs 9, 10, which are arranged on the cross-member 5 and on the arm 3 as described earlier in relation to the embodiment shown in Figure 1.

An interesting variation is shown in Figure 5, in which the frame has a cross-like shape composed of four arms 3, 4, which are arranged with angles of 90° with respect to each other. In this case, it is possible to provide two bulbs arranged on two perpendicular arms of the cross or, as shown in Figure 5, a single spherical bulb 12 arranged at the intersection point of the arms 3,4.

In another variation of the invention, shown in Figure 6, two resting feet 13 of the level are adjustable, so as to be able to vary the inclination of the resting side of the level with respect to the reading side. In this case, the two adjustable feet 13 are mounted on threaded stems 14, which are screwed to the ends of the arms 3, 4 so as to allow to lift and lower the frame with an angle which can be detected by the bulb 9 arranged on the arm 3. As is evident, the possibility to adjust the height of the feet 13 allows to adjust the inclination (slope) of the component according to a preset angle, for example when it is necessary to give the appropriate slope to windowsills or to channels, so as to allow the draining of water.

Conveniently, the slope of the component can be determined by linking it to the screwing of the feet into the arms 3, 4. By way of non-limiting example, Figure 7 illustrates a solution in which the end of the stems that lies opposite the feet 13 protrudes upward from the arms 3, 4 in order to be sighted with a graduated scale 15 provided on a wall 16 obtained by forming a bevel in the arms 3, 4.

In order to determine the inclination of a component, it is also possible to use the level shown in Figure 1 by providing it with a graduated scale suitable to indicate the inclination of the level with respect to the component. Such graduated scale can be associated with the bulb 9 mounted on the arm 3, or with an additional bulb 17 applied to the arm 4. This last version, shown in Figure 8, offers the advantage of keeping separate the two capabilities of the level to check the horizontality and the slope of the components. In a last but not least variation of the invention, the arms 3, 4 and the cross-member 5 are connected to each other articulately, so that they can be rotated and folded in order to reduce the overall dimensions of the level when it is not in use and has to be stored in a container for protection and transport.

The disclosures in Italian Patent Application No. B02004U000070 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A spirit level, **characterized by** a frame (2) which comprises a side for resting on the surface of the component whose arrangement is to be checked and a reading side provided with receptacles for accommodating two bulbs (9, 10), each of which contains a bubble, said bulbs being suitable to allow viewing of the bubbles from the same reading side of the frame, said bulbs being arranged at right angles to each other so that their respective bubbles can move along planes which are perpendicular to each other and to said resting side of the frame, so as to detect inclination along two degrees of freedom of the surface of the component with respect to the horizontal plane defined by said bubbles when they are in the centered position in the bulbs.

2. The level according to claim 1, **characterized in that** said frame (2) is constituted by two parallel arms (3, 4) which are mutually connected by a cross-member (5).

3. The level according to claim 1, **characterized in that** said frame is constituted by a cross-member (5) and by an arm (3) which is connected in an L-shaped configuration to one end of the cross-member (5).

4. The level according to claim 1, **characterized in that** said frame is constituted by a cross-member (5) and by an arm (3, 4) which are connected in a T-shaped configuration.

5. The level according to claim 1, **characterized in that** said frame is constituted by a cross-member (5) and by two arms (3, 4) which are connected in a U-shaped configuration to the opposite ends of said cross-member.

6. The level according to claim 1, **characterized in that** said frame is shaped like a cross composed of four arms (3, 4) arranged with angles of 90° to each other.

7. The level according to claim 6, **characterized in that** it comprises a single spherical bulb (12) which is arranged at the intersection point of said arms (3, 4).

8. The level according to one of the preceding claims 2 to 7, **characterized in that** the arms of said frame are provided with resting feet (11, 13).

9. The level according to claim 8, **characterized in that** two of said feet (13) are adjustable so as to be able to vary the inclination of the resting side of the level with respect to the reading side.

10. The level according to claim 9, **characterized in that** said feet (13) are provided with threaded stems (14), which are screwed to the ends of said arms (3, 4) so as to allow to lift and lower the frame with an angle that can be detected by a bulb arranged on at least one of said arms.

11. The level according to claim 10, **characterized in that** said threaded stems (14) are guided through said arms (3, 4) in order to be sighted with a graduated scale (15) provided on said arms.

12. The level according to one of claims 1 to 10, **characterized in that** a bulb (17) is arranged on one or both of said arms (3, 4) and is provided with a graduated scale which is suitable to indicate the inclination of the level with respect to a horizontal plane.

13. The level according to one of the preceding claims, **characterized in that** said arms (3, 4) and said cross-member (5) which constitute the frame are articulately connected to each other so that they can be rotated and folded in order to reduce the overall dimensions of the level.
